# EUROPEAN PATENT APPLICATION

(11) **EP 4 717 391 A1**
(43) Date of publication of application: **01.04.2026**
(21) Application number: 25193654.8
(22) Date of filing: 04.08.2025
(51) Int. Cl.: B23K 11/30

(54) **SOLID-PHASE RESISTANCE SPOT JOINING APPARATUS**

(30) Priority: 30.09.2024 JP 2024170280
(71) Applicant: DAIHEN Corporation, Yodogawa-ku Osaka-shi, Osaka 532-8512 (JP)
(72) Inventor: TAKEI, Yuko, Osaka-shi, Osaka, 532-8512 (JP); TAKAMOTO, Keiji, Osaka-shi, Osaka, 532-8512 (JP)
(74) Representative: Hoffmann Eitle

(57) **Abstract**

A drive mechanism (120) is capable of moving an electrode (110) relatively to a pressurization shaft (100) in an axial direction. The drive mechanism (120) includes a cylinder (130) and a piston (140). The cylinder (130) is fixed to the pressurization shaft (100) as surrounding the pressurization shaft (100) and provided with an inner circumferential surface (135) that extends along the axial direction. The piston (140) is accommodated in the cylinder (130) while it is connected to the electrode (110), and driven by a pressure of fluid. The piston (140) partitions an internal space in the cylinder (130) into a first chamber (11) and a second chamber (12). As fluid alternately goes in and out of the first chamber (11) and the second chamber (12), the piston (140) is driven in the axial direction while it slides with respect to the inner circumferential surface (135), and the electrode (110) is movable in the axial direction together with the piston (140).

## Description

### CROSS REFERENCE TO RELATED APPLICATIONS

This nonprovisional application is based on Japanese Patent Application No. 2024-170280 filed with the Japan Patent Office on September 30, 2024, the entire contents of which are hereby incorporated by reference.

### BACKGROUND OF THE INVENTION

### Field of the Invention

The present invention relates to a solid-phase resistance spot joining apparatus.

### Description of the Background Art

Japanese Patent Laying-Open No. 2024-8499 is a prior art document that discloses a configuration of a solid-phase resistance spot joining apparatus. The solid-phase resistance spot joining apparatus described in Japanese Patent Laying-Open No. 2024-8499 includes a pressurization shaft, an electrode, and an elastic member. The pressurization shaft presses a plurality of overlaid objects to be joined (objects) in a plastically deformable manner. The electrode is arranged around the pressurization shaft and applies a voltage to the plurality of objects. The elastic member biases the electrode toward the plurality of objects.

Japanese Patent Laying-Open No. 2022-74258 is a prior art document that discloses a configuration of a rotary pressing apparatus for rotary friction welding. The rotary pressing apparatus for rotary friction welding described in Japanese Patent Laying-Open No. 2022-74258 welds a plug and a target by rotary friction welding. The rotary pressing apparatus for rotary friction welding includes a pressing mechanism. The pressing mechanism applies pressing force to the plug with a hydraulic cylinder.

Japanese Patent No. 5204928 is a prior art document that discloses a configuration of a cylinder similar to that in Japanese Patent Laying-Open No. 2022-74258.

### SUMMARY OF THE INVENTION

When pressurization force to pressurize the electrode is to be changed in the solid-phase resistance spot joining apparatus described in Japanese Patent Laying-Open No. 2024-8499, the elastic member should be replaced each time, for obtaining necessary pressurization force. When a frequency of change of pressurization force to pressurize the electrode is high, man-hours for changing pressurization force to pressurize the electrode may increase.

The apparatuses other than the solid-phase resistance spot joining apparatus described in Japanese Patent Laying-Open No. 2022-74258 and Japanese Patent No. 5204928 include a cylinder structure driven by a pressure of fluid. There is a room for application of the cylinder structure to setting of pressurization force to pressurize the electrode in the solid-phase resistance spot joining apparatus.

The present invention was made to solve the problem above, and an object thereof is to provide a solid-phase resistance spot joining apparatus in which pressurization force to pressurize an electrode can readily be changed.

A solid-phase resistance spot joining apparatus based on the present invention includes a pressurization shaft, an electrode, and a drive mechanism. The pressurization shaft presses a plurality of overlaid objects from an axial direction in a plastically deformable manner. The electrode is arranged around the pressurization shaft and applies a voltage to the plurality of objects. The drive mechanism is capable of moving the electrode relatively to the pressurization shaft in the axial direction. The drive mechanism includes a cylinder and a piston. The cylinder is fixed to the pressurization shaft to surround the pressurization shaft, and provided with an inner circumferential surface that extends along the axial direction. The piston is accommodated in the cylinder while the piston is connected to the electrode, and driven by a pressure of fluid. The piston partitions an internal space in the cylinder into a first chamber and a second chamber. As fluid alternately goes in and out of the first chamber and the second chamber, the piston is driven in the axial direction while the piston slides with respect to the inner circumferential surface, and the electrode is movable in the axial direction together with the piston.

**In** this case, as compared with an example where the electrode is driven by an elastic member, it is not necessary to replace the elastic member each time pressurization force to pressurize the electrode is changed. Therefore, man-hours for changing pressurization force to pressurize the electrode can be reduced. Consequently, in the solid-phase resistance spot joining apparatus, pressurization force to pressurize the electrode can readily be changed.

**In** one form of the present invention, each of the cylinder and the piston includes an insulating portion to insulate the pressurization shaft and the electrode from each other.

Since the pressurization shaft and the electrode can thus be insulated from each other, sticking between the pressurization shaft and the plurality of objects involved with application of the voltage to the pressurization shaft can be suppressed.

In one form of the present invention, the piston includes a rod portion and a flange portion. The rod portion extends in the axial direction and has one end in the axial direction connected to the electrode. The flange portion radially extends from the other end in the axial direction of the rod portion in a direction orthogonal to the axial direction and abuts on the inner circumferential surface. The first chamber is located on a side of the rod portion when viewed from the flange portion. The second chamber is located on a side opposite to the side of the rod portion when viewed from the flange portion. The rod portion and the flange portion are provided with a hole that passes through in the axial direction. The hole is sealed with the pressurization shaft being inserted therethrough. The second chamber is surrounded by the cylinder, the flange portion, and the pressurization shaft.

In this case, by configuring the drive mechanism as a single-rod mechanism, a part of the second chamber can be surrounded by the pressurization shaft as compared with a double-rod mechanism, and hence a component of the cylinder can be omitted. Since the drive mechanism can consequently be reduced in size, the solid-phase resistance spot joining apparatus can be reduced in size.

In one form of the present invention, the cylinder includes a bush made of metal, the bush defining the inner circumferential surface, the bush sliding with respect to the piston.

Durability of the drive mechanism can thus be improved.

The solid-phase resistance spot joining apparatus in one form of the present invention further includes a sleeve. The sleeve is arranged to close a gap between the pressurization shaft and the electrode, and it is insulating. The sleeve is slidable with respect to the pressurization shaft or the electrode.

Since introduction of spatters in the inside of the drive mechanism at the time of solid-phase resistance spot joining can thus be suppressed, the drive mechanism can be driven in a stable manner.

The foregoing and other objects, features, aspects, and advantages of this invention will become more apparent from the following detailed description of this invention when taken in conjunction with the accompanying drawings.

### BRIEF DESCRIPTION OF THE DRAWINGS

Fig. 1 is a front view showing a configuration of a solid-phase resistance spot joining apparatus according to one embodiment of the present invention.
Fig. 2 is a perspective view showing a configuration of a joining unit according to one embodiment of the present invention.
Fig. 3 is a cross-sectional view of the configuration of the joining unit in Fig. 2 viewed from a direction along the line III-III.
Fig. 4 is a cross-sectional view showing a state that a drive mechanism has pushed an electrode toward an object.
Fig. 5 is a cross-sectional view showing a configuration of a drive mechanism included in a solid-phase resistance spot joining apparatus according to a comparative example.

### DESCRIPTION OF THE PREFERRED EMBODIMENTS

A solid-phase resistance spot joining apparatus according to one embodiment of the present invention will be described below with reference to the drawings. In the description of the embodiment below, the same or corresponding elements in the drawings have the same reference characters allotted and description thereof will not be repeated.

In the drawings, a direction orthogonal to an axial direction of a pressurization shaft and in parallel to a direction of extension of a connection conductor is defined as an X direction. The axial direction of the pressurization shaft is defined as a Y direction. Furthermore, a direction orthogonal to the axial direction of the pressurization shaft and the direction of extension of the connection conductor is defined as a Z direction.

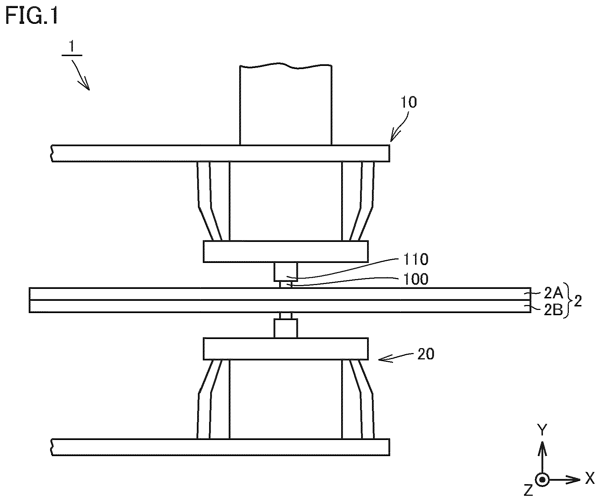

Fig. 1 is a front view showing a configuration of a solid-phase resistance spot joining apparatus according to one embodiment of the present invention.

As shown in Fig. 1, a solid-phase resistance spot joining apparatus 1 according to one embodiment of the present invention is an apparatus that joins a plurality of overlaid objects 2 to each other while they are in a solid-phase state, by feeding a current to the plurality of objects 2 to form softened regions in the plurality of objects 2 and plastically deforming the softened regions.

Solid-phase resistance spot joining apparatus 1 includes a joining unit 10 and another joining unit 20.

Joining unit 10 is a unit configured to press the plurality of objects 2 in a plastically deformable manner and to apply a voltage to the plurality of objects 2. Joining unit 10 is driven in an axial direction (Y direction) by a not-shown drive source such as a servo press. A configuration of joining unit 10 will be described later.

Another joining unit 20 is a unit configured to press the plurality of objects 2 together with joining unit 10 and to apply a voltage to the plurality of objects 2. Another joining unit 20 is fixed to a not-shown housing of solid-phase resistance spot joining apparatus 1.

Another joining unit 20 in the present embodiment is the same in configuration as joining unit 10, with joining unit 20 and joining unit 10 being in symmetry with respect to an XZ plane. Another joining unit 20 is not limited to this configuration, and it may be configured, for example, not to be provided with a drive mechanism 120 which will be described later.

A voltage is applied to joining unit 10 and another joining unit 20 by a not-shown power supply portion. A voltage is applied to joining unit 10 by a connection conductor 150 which will be described later. A voltage is applied also to another joining unit 20 by the connection conductor.

Object 2 to be joined by solid-phase resistance spot joining apparatus 1 is, for example, a steel plate such as a high tensile strength steel plate. Object 2 is not limited to the steel plate, and it may be an aluminum plate or materials different from each other in type such as a steel plate and an aluminum plate.

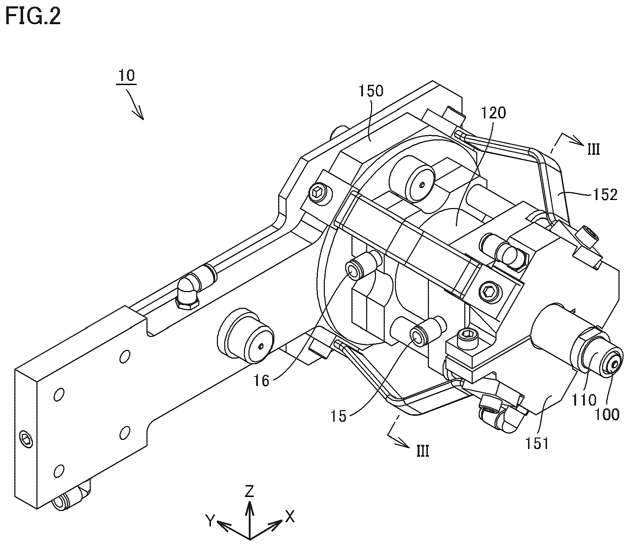

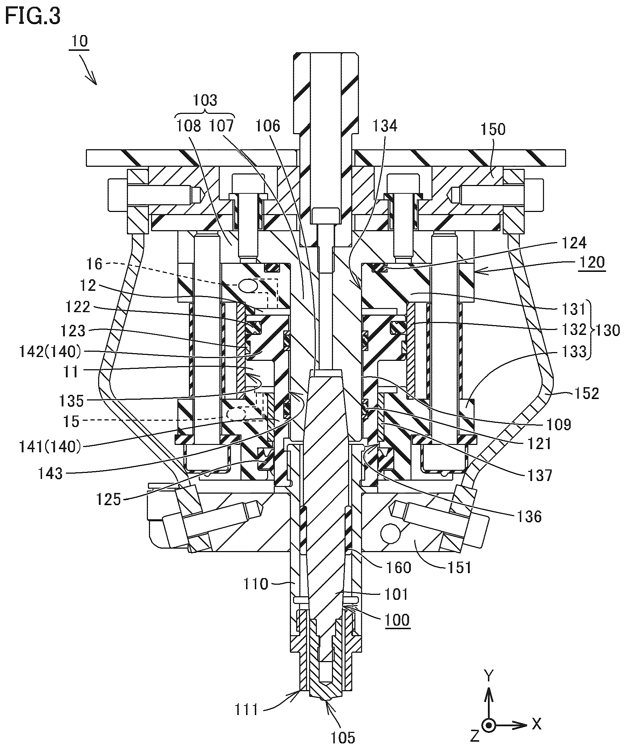

Joining unit 10 will be described below. Fig. 2 is a perspective view showing a configuration of the joining unit according to one embodiment of the present invention. Fig. 3 is a cross-sectional view of the configuration of the joining unit in Fig. 2 viewed from a direction along the line III-III.

As shown in Figs. 2 and 3, joining unit 10 in one embodiment of the present invention includes a pressurization shaft 100, an electrode 110, drive mechanism 120, connection conductor 150, a plate-shaped member 151, a wiring member 152, and a sleeve 160.

Pressurization shaft 100 presses the plurality of overlaid objects 2 from the axial direction (Y direction) in a plastically deformable manner. Specifically, pressurization shaft 100 in the present embodiment presses the plurality of objects 2 with pressing force from 30 to 50 kN by being driven by the drive source.

Pressurization shaft 100 in the present embodiment includes a main shaft 101 and a tubular member 103. Pressurization shaft 100 may be configured by main shaft 101 and tubular member 103 as being integrated.

Main shaft 101 is a columnar member that extends in the Y direction. A material for main shaft 101 is, for example, tungsten carbide. The material for main shaft 101 is not particularly limited so long as necessary pressing force can be applied to object 2, and the material may be tool steel, heat-resisting steel, ceramic, or the like.

Main shaft 101 includes a tip end 105 and a rear end 106. Tip end 105 is a portion to be in contact with an object 2A (see Fig. 1) located on a side of joining unit 10, of the plurality of objects 2. Rear end 106 is connected to tubular member 103. Rear end 106 is tapered and is engaged with an inner circumferential surface of tubular member 103.

Main shaft 101 in the present embodiment is composed of two members such that a tip end portion thereof is replaceable. Main shaft 101 is not limited to this configuration, and may be composed of a single member.

Tubular member 103 is a member that supports main shaft 101. A material for tubular member 103 is, for example, a steel material.

Tubular member 103 includes a cylindrical portion 107 and a flange portion 108. Cylindrical portion 107 extends in the Y direction. Cylindrical portion 107 is provided with a tapered inner circumferential surface at a tip end. Flange portion 108 radially extends from an upper end of cylindrical portion 107 on the XZ plane. Flange portion 108 is fixed to connection conductor 150.

Electrode 110 is driven in the Y direction by the drive source, together with pressurization shaft 100. Electrode 110 is arranged around pressurization shaft 100 at a distance from pressurization shaft 100. A tip end 111 of electrode 110 in the present embodiment is in a cylindrical shape when viewed from the Y direction.

Electrode 110 applies a voltage to the plurality of objects 2. Electrode 110 applies the voltage to the plurality of objects 2 to feed a current at 3500 to 10000 A to the plurality of objects 2 to heat the plurality of objects 2. Electrode 110 is composed, for example, of copper.

Electrode 110 in the present embodiment is composed of two members such that a tip end portion thereof is replaceable. Electrode 110 is not limited to this configuration and may be composed of a single member.

Connection conductor 150 is fixed to tubular member 103 in an insulated state. Plate-shaped member 151 is conductive and connected to a circumferential surface of electrode 110. Wiring member 152 electrically connects connection conductor 150 and plate-shaped member 151 to each other. Wiring member 152 is formed, for example, from a copper wire.

A current supplied from the power supply portion flows sequentially through connection conductor 150, wiring member 152, plate-shaped member 151, and electrode 110 and flows to object 2. In solid-phase resistance spot joining apparatus 1, pressurization shaft 100 and electrode 110 press objects 2, and objects 2A and 2B are brought in intimate contact with each other at their contact surfaces and a contact resistance lowers. The contact surfaces lowered in contact resistance serve as a current feed path and the current passes therethrough.

Drive mechanism 120 is capable of moving electrode 110 relatively to pressurization shaft 100 in the axial direction (Y direction). Drive mechanism 120 is driven by a pressure of fluid. Drive mechanism 120 in the present embodiment is driven by an air pressure. Drive mechanism 120 is not limited to an air driven type, but may be a type driven by a pressure by another fluid, such as a hydraulic pressure.

Drive mechanism 120 includes a cylinder 130 and a piston 140.

Cylinder 130 is fixed to pressurization shaft 100 to surround pressurization shaft 100. Cylinder 130 surrounds the entire circumference in the Y direction of pressurization shaft 100. Cylinder 130 is fixed to pressurization shaft 100, for example, by fastening of a bolt. Cylinder 130 is fixed to flange portion 108 of tubular member 103 of pressurization shaft 100.

Cylinder 130 includes a cylinder head 131, a bush 132, and a cylinder rod 133.

Cylinder head 131 is a plate-shaped member that extends on the XZ plane. Cylinder head 131 abuts on flange portion 108 of tubular member 103 from the Y direction. Cylinder head 131 is provided with a hole 134 that passes through in the Y direction. Tubular member 103 of pressurization shaft 100 is inserted through hole 134 provided in cylinder head 131.

Bush 132 is arranged on an electrode 110 side of cylinder head 131. Bush 132 is sandwiched between cylinder head 131 and cylinder rod 133.

Bush 132 is a cylindrical member that extends along the axial direction (Y direction). Bush 132 includes an inner circumferential surface 135 that extends along the axial direction (Y direction). In other words, bush 132 defines inner circumferential surface 135 in cylinder 130. Bush 132 is made of metal. Bush 132 slides with respect to piston 140.

Cylinder rod 133 is a plate-shaped member that extends on the XZ plane. Cylinder rod 133 is arranged on the electrode 110 side of bush 132. Cylinder rod 133 is provided with a hole 136 that passes through in the Y direction. Pressurization shaft 100 and piston 140 are inserted through hole 136 provided in cylinder rod 133.

An inner bush 137 is provided in hole 136 in cylinder rod 133. Inner bush 137 is made of metal. Inner bush 137 slides with respect to a rod portion 141 of piston 140, which will be described later.

Piston 140 is accommodated in cylinder 130 while it is connected to electrode 110. Piston 140 is driven by a pressure of fluid. In the present embodiment, piston 140 is driven by an air pressure.

Piston 140 includes rod portion 141 and a flange portion 142. Drive mechanism 120 in the present embodiment has what is called a single-rod structure in which one rod portion 141 is provided on one side of flange portion 142.

Rod portion 141 is in a cylindrical shape. Rod portion 141 extends in the axial direction (Y direction). Rod portion 141 has one end in the axial direction (Y direction) connected to electrode 110. Rod portion 141 is connected to electrode 110 by screwing.

Flange portion 142 radially extends from the other end in the axial direction (Y direction) of rod portion 141 in a direction orthogonal to the axial direction. In the present embodiment, flange portion 142 radially extends on the XZ plane. Flange portion 142 abuts on inner circumferential surface 135.

Rod portion 141 and flange portion 142 are provided with a hole 143 that passes through in the axial direction (Y direction). Pressurization shaft 100 is inserted through hole 143. Piston 140 is arranged as being supported by an outer circumferential surface 109 of pressurization shaft 100. Hole 143 is sealed with pressurization shaft 100 being inserted therethrough.

Each of cylinder 130 and piston 140 is provided with an insulating portion to insulate pressurization shaft 100 and electrode 110 from each other. Each of cylinder 130 and piston 140 in the present embodiment includes the insulating portion by being composed of an insulating material. Each of cylinder 130 and piston 140 is composed, for example, of phenol resin. Each of cylinder 130 and piston 140 may be composed of metal coated with an insulating material.

Drive mechanism 120 is provided with an inner gasket 121, an outer gasket 122, a ring member 123, an upper gasket 124, and a lower gasket 125.

Inner gasket 121 is provided at a wall surface of hole 143. Inner gasket 121 is provided to seal hole 143 with pressurization shaft 100 being inserted therethrough.

Inner gasket 121 is provided at at least two locations along the axial direction (Y direction). In the present embodiment, two inner gaskets 121 are provided along the axial direction (Y direction) at a distance from each other. Piston 140 is thus supported with respect to pressurization shaft 100 in a direction along the Y direction. Consequently, inclination of piston 140 in the Y direction or position displacement (misalignment) of piston 140 with respect to pressurization shaft 100 can be suppressed.

Outer gasket 122 and ring member 123 are provided at an outer circumferential portion of flange portion 142. Outer gasket 122 seals a gap between inner circumferential surface 135 of cylinder 130 and flange portion 142 of piston 140. Ring member 123 assists slide of inner circumferential surface 135 and flange portion 142 with respect to each other. Ring member 123 is made of metal or resin. In an example where the ring member is made of resin, resin is desirably relatively strong resin such as cloth-inserted phenol. The ring member made of resin thus suppresses seizure or galling at the time of slide better than the ring member made of metal.

Upper gasket 124 is provided at cylinder head 131. Upper gasket 124 seals a gap between pressurization shaft 100 and drive mechanism 120.

Upper gasket 124 is provided at an upper end surface in the Y direction of cylinder head 131. If upper gasket 124 is arranged at a wall surface of hole 134 provided in cylinder 131, in an attempt to secure a sealing function of upper gasket 124, a sealing function of inner gasket 121 may become insufficient due to such a factor as manufacturing tolerance or the like of upper gasket 124 and inner gasket 121. Therefore, by providing upper gasket 124 at the upper end surface in the Y direction of cylinder head 131, upper gasket 124 and inner gasket 121 are not arranged along outer circumferential surface 109. Since influence by upper gasket 124 on the sealing function of inner gasket 121 is consequently suppressed, hermeticity of an internal space in drive mechanism 120 can be improved.

Lower gasket 125 is provided at a wall surface of hole 136 in cylinder rod 133. Lower gasket 125 seals a gap between rod portion 141 and cylinder rod 133.

An internal space in cylinder 130 is sealed by inner gasket 121, upper gasket 124, and lower gasket 125.

Piston 140 partitions the internal space in cylinder 130 into a first chamber 11 and a second chamber 12. First chamber 11 is located on a side of rod portion 141 when viewed from flange portion 142. Second chamber 12 is located on a side opposite to rod portion 141 when viewed from flange portion 142.

First chamber 11 communicates with a first supply path 15. First supply path 15 is provided as being inserted through the inside of cylinder rod 133. Air can be supplied through first supply path 15 to first chamber 11. Air in first chamber 11 can be exhausted through first supply path 15.

Second chamber 12 communicates with a second supply path 16. Second supply path 16 is provided as being inserted through the inside of cylinder head 131. Air can be supplied through second supply path 16 to second chamber 12. Air in second chamber 12 can be exhausted through second supply path 16.

Sleeve 160 is arranged to close a gap between pressurization shaft 100 and electrode 110. Sleeve 160 is insulating.

Sleeve 160 is slidable with respect to pressurization shaft 100 or electrode 110. Sleeve 160 in the present embodiment is fitted to pressurization shaft 100. Sleeve 160 is thus slidable with respect to electrode 110.

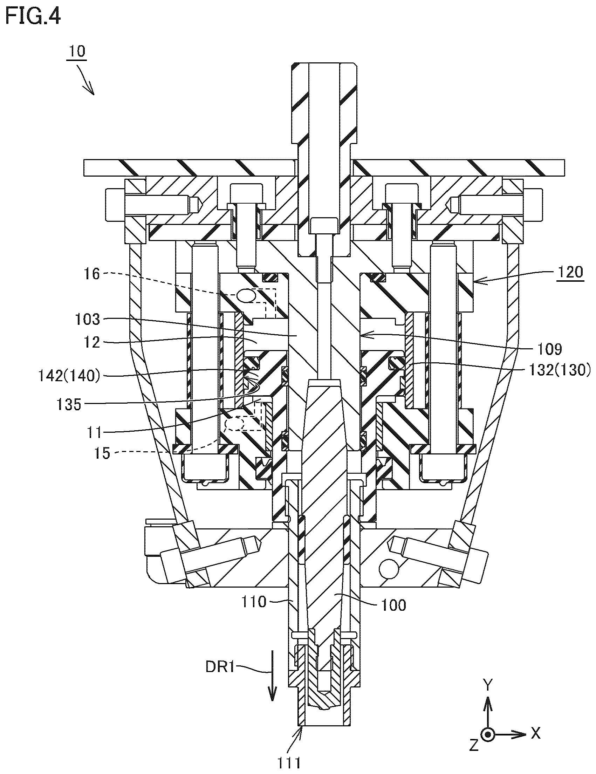

Fig. 4 is a cross-sectional view showing a state that the drive mechanism has pushed the electrode toward the object.

As shown in Figs. 3 and 4, as fluid alternately goes in and out of first chamber 11 and second chamber 12, piston 140 is driven in the axial direction (Y direction) while it slides with respect to inner circumferential surface 135. Electrode 110 is thus movable in the axial direction (Y direction) together with piston 140.

As shown in Figs. 1, 3, and 4, solid-phase resistance spot joining apparatus 1 initially operates in such a manner that electrode 110 is moved toward the plurality of objects 2 by being driven by drive mechanism 120. Specifically, air in first chamber 11 in cylinder 130 is exhausted and air is supplied to second chamber 12. First chamber 11 becomes smaller and the second chamber becomes larger. Electrode 110 thus moves toward object 2 as piston 140 is driven (a direction shown with DR1 in Fig. 4). A moving distance of electrode 110 is, for example, 8 mm at the maximum.

Then, as the drive source drives joining unit 10, electrode 110 abuts on object 2A of the plurality of objects 2, which is located on the side of joining unit 10. As electrode 110 is brought into contact with object 2A before pressurization shaft 100 and a preload is applied, object 2 can provisionally be positioned. The electrode of another joining unit 20 abuts on object 2B of the plurality of objects 2.

While electrode 110 is pressed against the plurality of objects 2 by pressurization force from drive mechanism 120, pressurization shaft 100 is then pressed against the plurality of objects 2. Electrode 110 retracts while an air pressure is applied thereto until pressurization shaft 100 abuts on the plurality of objects 2.

Electrode 110 then applies the voltage to the plurality of objects 2. The contact surfaces lowered in contact resistance as a result of intimate contact between objects 2 serve as the current feed path and the current flows therethrough. The plurality of objects 2 are thus heated and softened regions are formed between the plurality of objects 2.

As the softened regions of objects 2 are pressed by pressurization shaft 100 while the current is fed from electrode 110 to objects 2, the softened regions plastically deform. As a result of plastic deformation of the softened regions, new surfaces are formed in the softened regions. As the new surfaces abut on each other, objects 2A and 2B are joined by solid-phase resistance spot joining.

The order of contact of pressurization shaft 100 and electrode 110 with object 2 is not limited. Pressurization shaft 100 may come in contact with object 2 before electrode 110, or pressurization shaft 100 and electrode 110 may simultaneously come in contact with object 2.

A solid-phase resistance spot joining apparatus according to a comparative example will be described below. Since the solid-phase resistance spot joining apparatus according to the comparative example is different in configuration of the drive mechanism from solid-phase resistance spot joining apparatus 1 according to one embodiment of the present invention, description of features similar to those of solid-phase resistance spot joining apparatus 1 according to one embodiment of the present invention will not be repeated.

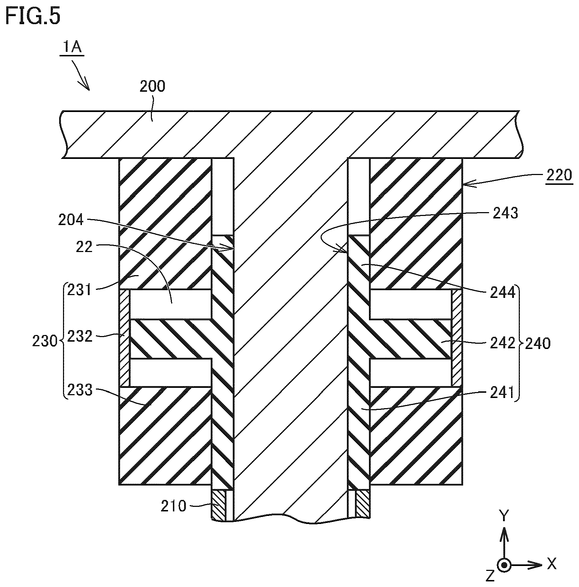

Fig. 5 is a cross-sectional view showing a configuration of the drive mechanism included in the solid-phase resistance spot joining apparatus according to the comparative example. Fig. 5 does not show a detailed connection structure of each feature.

As shown in Fig. 5, a solid-phase resistance spot joining apparatus 1A according to the comparative example includes a pressurization shaft 200, an electrode 210, and a drive mechanism 220. Drive mechanism 220 includes a cylinder 230 and a piston 240. Cylinder 230 includes a cylinder head 231, a bush 232, and a cylinder rod 233.

Piston 240 according to the comparative example includes a first rod portion 241, a flange portion 242, and a second rod portion 244. Drive mechanism 220 in the present comparative example has what is called a double-rod mechanism in which rod portions are provided on opposing sides of flange portion 242.

A second chamber 22 in the comparative example is partitioned by cylinder 230 and piston 240. As cylinder head 231 and second rod portion 244 are aligned on the XZ plane, a size of drive mechanism 220 tends to relatively be large on the XZ plane.

As shown in Figs. 3 and 4, on the other hand, drive mechanism 120 in one embodiment has what is called a single-rod structure. Therefore, second chamber 12 is surrounded by cylinder 130, flange portion 142, and pressurization shaft 100. Since drive mechanism 120 in one embodiment does not have to include a component (second rod portion 244 in the present comparative example) of cylinder 130 by a part of second chamber 12 being surrounded by pressurization shaft 100 as compared with drive mechanism 220 having the double-rod mechanism in the comparative example, drive mechanism 120 can be reduced in size.

In solid-phase resistance spot joining apparatus 1 in the present embodiment, drive mechanism 120 moves electrode 110 with the use of the pressure of fluid (air in the present embodiment). By thus adjusting the pressure of fluid, necessary pressurization force to pressurize electrode 110 can be changed. As compared with an example where electrode 110 is driven by the elastic member, solid-phase resistance spot joining apparatus 1 does not require replacement of the elastic member each time pressurization force to pressurize electrode 110 is changed. Therefore, man-hours for changing pressurization force to pressurize electrode 110 can be reduced. Consequently, solid-phase resistance spot joining apparatus 1 can readily change pressurization force to pressurize electrode 110.

In solid-phase resistance spot joining apparatus 1 in the present embodiment, each of cylinder 130 and piston 140 is provided with the insulating portion to insulate pressurization shaft 100 and electrode 110. Therefore, sticking between pressurization shaft 100 and the plurality of objects 2 involved with application of the voltage to pressurization shaft 100 can be suppressed.

In an example where drive mechanism 120 is formed from an insulating member, use of a material lower in rigidity than metal, such as resin, for the insulating member may be assumed. In this case, in order to secure sufficient rigidity of drive mechanism 120, drive mechanism 120 tends to increase in size. In the present embodiment, pressurization shaft 100 is configured to support piston 140 of drive mechanism 120. Since pressurization shaft 100 and piston 140 may thus be considered as an integrated member to secure rigidity of piston 140, a size of piston 140 can be smaller than a size necessary for securing rigidity with piston 140 alone. Consequently, drive mechanism 120 can be reduced in size.

In solid-phase resistance spot joining apparatus 1 in the present embodiment, drive mechanism 120 has a single-rod mechanism. Then, as compared with an example where only the cylinder and the piston define an accommodation chamber for fluid (double-rod mechanism), a part of second chamber 12, of first chamber 11 and second chamber 12 which are air accommodation chambers, can be surrounded by pressurization shaft 100, and a component of cylinder 130 does not have to be provided. Consequently, drive mechanism 120 can be reduced in size. Then, solid-phase resistance spot joining apparatus 1 can be reduced in size.

In solid-phase resistance spot joining apparatus 1 in the present embodiment, cylinder 130 includes bush 132 made of metal which slides with respect to piston 140. Therefore, since bush 132 made of metal can be arranged at a location where piston 140 slides, durability of drive mechanism 120 can be improved.

In solid-phase resistance spot joining apparatus 1 in the present embodiment, sleeve 160 that closes a gap between pressurization shaft 100 and electrode 110 and is slidable with respect to electrode 110 is provided, so that introduction of spatters in the inside of drive mechanism 120 at the time of solid-phase resistance spot joining can be suppressed and hence drive mechanism 120 can be driven in a stable manner. Since electrode 110 is positioned by sleeve 160, misalignment of electrode 110 with respect to pressurization shaft 100 can be suppressed.

### [Additional Aspects]

As set forth above, the present embodiment includes disclosure as below.

### [Configuration 1]

A solid-phase resistance spot joining apparatus (1) includes
a pressurization shaft (100) that presses a plurality of overlaid objects (2) from an axial direction in a plastically deformable manner,
an electrode (110) arranged around the pressurization shaft (100), the electrode (110) applying a voltage to the plurality of objects (2), and
a drive mechanism (120) capable of moving the electrode (110) relatively to the pressurization shaft (100) in the axial direction,
the drive mechanism (120) includes
   a cylinder (130) fixed to the pressurization shaft (100) to surround the pressurization shaft (100), the cylinder (130) being provided with an inner circumferential surface (135) that extends along the axial direction, and
   a piston (140) accommodated in the cylinder (130) while the piston (140) is connected to the electrode (110), the piston (140) being driven by a pressure of fluid,
the piston (140) partitions an internal space in the cylinder (130) into a first chamber (11) and a second chamber (12), and
as the fluid alternately goes in and out of the first chamber (11) and the second chamber (12), the piston (140) is driven in the axial direction while the piston (140) slides with respect to the inner circumferential surface (135), and the electrode (110) is movable in the axial direction together with the piston (140).

### [Configuration 2]

In the solid-phase resistance spot joining apparatus (1) described in Configuration 1,
each of the cylinder (130) and the piston (140) includes an insulating portion to insulate the pressurization shaft (100) and the electrode (110) from each other.

### [Configuration 3]

In the solid-phase resistance spot joining apparatus (1) described in Configuration 1 or 2,
the piston (140) includes
   a rod portion (141) that extends in the axial direction, the rod portion (141) having one end in the axial direction connected to the electrode (110), and
   a flange portion (142) that radially extends from the other end in the axial direction of the rod portion (141) in a direction orthogonal to the axial direction and abuts on the inner circumferential surface (135),
the first chamber (11) is located on a side of the rod portion (141) when viewed from the flange portion (142),
the second chamber (12) is located on a side opposite to the side of the rod portion (141) when viewed from the flange portion (142),
the rod portion (141) and the flange portion (142) are provided with a hole (143) that passes through in the axial direction,
the hole (143) is sealed with the pressurization shaft (100) being inserted through the hole, and
the second chamber (12) is surrounded by the cylinder (130), the flange portion (142), and the pressurization shaft (100).

### [Configuration 4]

In the solid-phase resistance spot joining apparatus (1) described in any one of Configurations 1 to 3,
the cylinder (130) includes a bush (132) made of metal, the bush (132) defining the inner circumferential surface (135), the bush (132) sliding with respect to the piston (140).

### [Configuration 5]

The solid-phase resistance spot joining apparatus (1) described in any one of Configurations 1 to 4 further includes an insulating sleeve (160) arranged to close a gap between the pressurization shaft (100) and the electrode (110), and
the sleeve (160) is slidable with respect to the pressurization shaft (100) or the electrode (110).

Though embodiments of the present invention have been described, it should be understood that the embodiments disclosed herein are illustrative and non-restrictive in every respect. The scope of the present invention is defined by the terms of the claims and is intended to include any modifications within the scope and meaning equivalent to the terms of the claims.

## Claims

1. A solid-phase resistance spot joining apparatus (1) comprising:
a pressurization shaft (100) that presses a plurality of overlaid objects (2) from an axial direction in a plastically deformable manner;
an electrode (110) arranged around the pressurization shaft (100), the electrode (110) applying a voltage to the plurality of objects (2); and
a drive mechanism (120) capable of moving the electrode (110) relatively to the pressurization shaft (100) in the axial direction, wherein
the drive mechanism (120) includes
a cylinder (130) fixed to the pressurization shaft (100) to surround the pressurization shaft (100), the cylinder (130) being provided with an inner circumferential surface (135) that extends along the axial direction, and
a piston (140) accommodated in the cylinder (130) while the piston (140) is connected to the electrode (110), the piston (140) being driven by a pressure of fluid,
the piston (140) partitions an internal space in the cylinder (130) into a first chamber (11) and a second chamber (12), and
as the fluid alternately goes in and out of the first chamber (11) and the second chamber (12), the piston (140) is driven in the axial direction while the piston (140) slides with respect to the inner circumferential surface (135), and the electrode (110) is movable in the axial direction together with the piston (140).

2. The solid-phase resistance spot joining apparatus (1) according to claim 1, wherein
each of the cylinder (130) and the piston (140) includes an insulating portion to insulate the pressurization shaft (100) and the electrode (110) from each other.

3. The solid-phase resistance spot joining apparatus (1) according to claim 1 or 2, wherein
the piston (140) includes
a rod portion (141) that extends in the axial direction, the rod portion (141) having one end in the axial direction connected to the electrode (110), and
a flange portion (142) that radially extends from the other end in the axial direction of the rod portion (141) in a direction orthogonal to the axial direction and abuts on the inner circumferential surface (135),
the first chamber (11) is located on a side of the rod portion (141) when viewed from the flange portion (142),
the second chamber (12) is located on a side opposite to the side of the rod portion (141) when viewed from the flange portion (142),
the rod portion (141) and the flange portion (142) are provided with a hole (143) that passes through in the axial direction,
the hole (143) is sealed with the pressurization shaft (100) being inserted through the hole, and
the second chamber (12) is surrounded by the cylinder (130), the flange portion (142), and the pressurization shaft (100).

4. The solid-phase resistance spot joining apparatus (1) according to any one of claims 1 to 3, wherein
the cylinder (130) includes a bush (132) made of metal, the bush (132) defining the inner circumferential surface (135), the bush (132) sliding with respect to the piston (140).

5. The solid-phase resistance spot joining apparatus (1) according to any one of claims 1 to 4, further comprising an insulating sleeve (160) arranged to close a gap between the pressurization shaft (100) and the electrode (110), wherein
the sleeve (160) is slidable with respect to the pressurization shaft (100) or the electrode (110).
